Europäisches Patentamt

European Patent Office

Office européen des brevets

(11) Veröffentlichungsnummer: **0 409 765 A2**

## (12) EUROPÄISCHE PATENTANMELDUNG

(21) Anmeldenummer: **90710016.8**

(22) Anmeldetag: **04.07.90**

(51) Int. Cl.5: **G01N 21/31, G01J 3/26**

(30) Priorität: **19.07.89 DE 3923831**

(43) Veröffentlichungstag der Anmeldung:
**23.01.91 Patentblatt 91/04**

(84) Benannte Vertragsstaaten:
**DE FR GB IT NL**

(71) Anmelder: **Hartmann & Braun
Aktiengesellschaftaft
Gräfstrasse 97
D-6000 Frankfurt am Main 90(DE)**

(72) Erfinder: **Zöchbauer, Michael
Ebertstrasse 19
D-6370 Oberursel 1(DE)**

(54) **Interferometrische Einrichtung.**

(57) Die Erfindung betrifft ein interferometrische Einrichtung zum Nachweis einer Substanz mit strukturiertem, insbesondere periodischem oder quasiperiodischem Absorptionsspektrum und besteht aus einer Strahlungsquelle, in deren Strahlengang die zu untersuchende Substanz, ein Interferenzfilter, dessen Dicke den Abstand der Interferenzlinien bestimmt sowie ein Detektor angeordnet sind. Das Interferenzfilter ist ein thermooptisch abstimmbares Filter (E), welches aus einer Platte (P) aus thermooptisch aktivem Material besteht, deren Stirnseiten teildurchlässig verspiegelt (S) sein können. Eine Verschiebung der Durchlaßcharakteristik des Filters (E) wird mit Hilfe einer Temperaturänderung des Filters erzeugt wird, wobei die Temperaturdifferenz ein Maß für die Verschiebung ist. Die Dicke der Platte ist so gewählt, daß der Abstand der erzeugten Interferenzlinien dem Abstand der Absorptionslinien der zu bestimmenden Substanz entspricht.

Fig. 3

## INTERFEROMETRISCHE EINRICHTUNG

Die Erfindung betrifft eine interferometrische Einrichtung zum Nachweis einer Substanz nach dem Oberbegriff des Anspruchs 1.

In der älteren Anmeldung P 38 12 334.7 ist eine interferometrische Einrichtung dieser Art beschrieben. Zum Nachweis einer Substanz mit strukturiertem, insbesondere periodischem oder quasiperiodischem Absorptionsspektrum wird ein elektrisch abstimmbares Interferenzfilter verwendet. Es besteht aus einer Platte aus elektrooptischem Material, deren Stirnseiten teildurchlässig verspiegelt sind. Die Dicke der Platte wird dabei so gewählt, daß der Abstand der erzeugten Interferenzlinien dem Abstand der Absorptionslinien der zu bestimmenden Substanz entspricht. In einer weiteren Variante wird die Dioke so gewählt, daß eine Linie der Strahlung ausgeblendet wird, deren Bandbreite gering ist gegen den Abstand zweier Linien der zu untersuchenden Substanz. Schließlich kann man durch entsprechende Wahl der Plattendicke eine Linie der Strahlung so ausblenden, daß sie die Flanke einer Absorptionsbande der zu untersuchenden Substanz überlappt. Die beschriebene interferometrische Einrichtung läßt sich auch derart modifizieren, daß anstelle der Platte eine mit doppelbrechenden Flüssigkristallen gefüllte Zelle verwendet wird, deren Fenster auf der Innenseite teildurchlässig verspiegelt sind. Die beschriebene interferometrische Einrichtung ist jedoch nicht für alle Substanzen gleichermaßen geeignet. Betrachtet man z.B. den selektiven Nachweis von Kohlenmonoxyd CO bei 4,6 μm Wellenlänge, ergeben sich folgende Probleme: mit einer Lithiumniobat-Platte entsprechender Dioke erfolgt der elektrische Durchschlag bereits bei einer Steuerspannung, die deutlich unter der erforderlichen optimalen Spannung liegt. Die optimale Meßempfindlichkeit wird somit nicht erreicht. Wählt man andererseits die Flüssigkristall-Variante, so ergeben sich zur Erfüllung der Resonanzbedingung Zellendicken, die in dieser Technologie nicht mehr beherrschbar sind. Somit scheiden beide Varianten für die CO-Messung aus. Ähnliche Schwierigkeiten sind auch für andere Substanzen mit vergleichbarem Abstand der Absorptionslinien zu erwarten.

Der Erfindung liegt die Aufgabe zugrunde, eine interferometrische Einrichtung nach dem Oberbegriff des Patentanspruchs 1 zu schaffen, die die genannten Nachteile nicht mehr aufweist.

Die Lösung der Aufgabe erfolgt erfindungsgemäß durch die Merkmale des kennzeichnenden Teils des Patentanspruches 1.

Als interferometrisches Element wird ein thermooptisch abstimmbares Filter verwendet, das aus einer thermooptisch aktiven Platte besteht. Hierzu eignen sich Materialien, deren Brechungsindex und/oder Dicke sich mit der Temperatur verändern. Dies trifft mehr oder weniger für alle Materialien zu. Vorteilhaft läßt sich z.B. eine Siliciumplatte einsetzen, die einen hohen thermooptischen Koeffizienten aufweist. Die thermooptische Platte wird so bearbeitet, daß ein Fabry-Perot-Element entsteht. Je nach Brechungsindex des verwendeten Materials stellt sich ein bestimmter Reflexionsgrad an den Stirnflächen ein, der für die Halbwertsbreite des Fabry-Perot-Elements bestimmend ist. Wird eine kleinere Halbwertsbreite gewünscht, kann dies über eine zusätzliche Verspiegelung der Stirnflächen erreicht werden. Je nach Art des Spektrums bzw. Ziel der Messung wie z.B. hche Empfindlichkeit, hohe Selektivität oder einfache Adaptierbarkeit an die Meßaufgabe ergeben sich unterschiedliche Ausführungsformen. Wenn eine hohe Empfindlichkeit gewünscht wird, ist eine Ausführungsform zu wählen, die einen relativ großen Teil des Absorptions-Spektrums erfaßt. Dies ist besonders dann vorteilhaft, wenn ein quasiperiodisches Linienspektrum vorliegt wie z.B. im Fall des CO-Moleküls bei 4,6 μm. In diesem Fall ist die Dicke der thermooptischen Platte so gewählt, daß das erzeugte Interferenzmuster der charakteristischen optischen Wegdifferenz des Moleküls entspricht, das nachzuweisen ist.

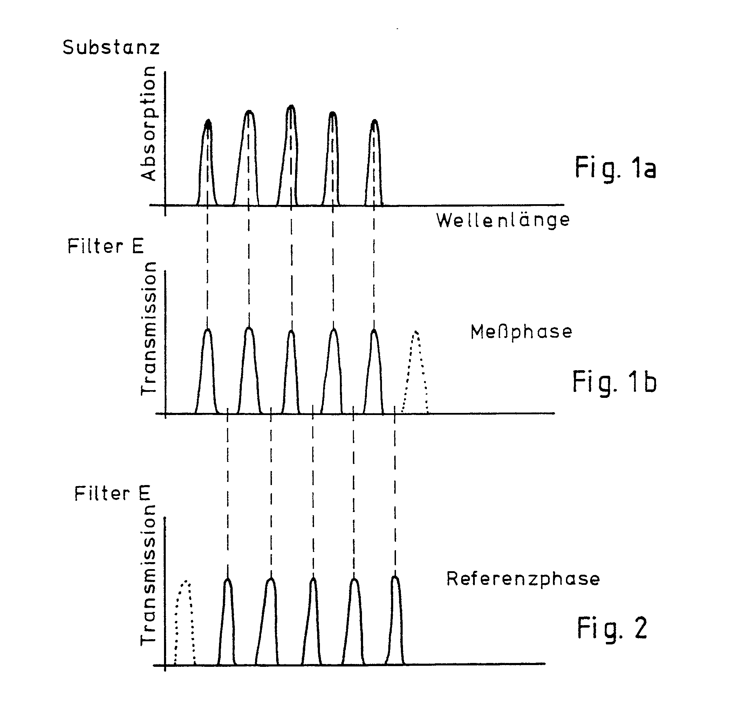

Das bedeutet, daß der Abstand zwischen den einzelnen Interferenzordnungen des thermooptischen Fabry-Perot-Elementes genau dem Abstand der periodischen Absorptionslinien der nachzuweisenden Substanz entspricht. Als Ausgangspunkt sei zunächst angenommen, daß das Interferenzmuster des Filters, wie in Fig. 1b dargestellt, mit den periodischen Absorptionslinien der Substanz, die in Fig. 1a dargestellt sind, genau zur Deckung gebracht wird. Die Einrichtung befindet sich jetzt in der Meßphase, die sich durch größtmögliche Absorption der gesuchten Substanz auszeichnet. Durch Änderung der Temperatur kann nun in einfacher Weise das Interferenzmuster so verschoben werden, daß Interferenzmuster und Absorptionslinien gerade "auf Lücke" stehen (Fig. 2). In diesem Zustand (Referenzphase) ist die Absorption der gesuchten Substanz gleich Null bzw. minimal. Durch periodische Modulation der Temperatur läßt sich ein ständiger Wechsel zwischen Meß- und Referenzphase erzielen, ohne daß die oben geschilderten Probleme auftreten. Mit der thermooptischen Modulation können nun auch Substanzen nachgewiesen werden, die mit der elektrooptischen Modulation nicht erfaßbar sind.

Eine hohe Selektivität wird besonders dann erreicht, wenn mit dem Interferometer eine einzige Linie erzeugt wird, derart, daß ihre Bandbreite klein ist gegen den Abstand zweier Linien in einem periodischen oder quasiperiodischen Absorptionsspektrum. Durch einfaches Verschieben der Zentralwellenlänge über die Absorptionslinie der zu untersuchenden Substanz entsteht ein Nutzsignal immer dann, wenn die Meßkomponente in der Absorptionsstrecke vorhanden ist. Da die überdeckte Korrelationsfläche geringer ist als bei der oben beschriebenen Variante, ist hier mit einem größeren Rauschen zu rechnen. Der Vorteil liegt in der Auswählbarkeit der Wellenlänge. Diese kann in einen Bereich gelegt werden, in dem eine Überlappung mit einer störenden Komponente nicht auftritt.

Eine dritte Möglichkeit, das hier beschriebene Verfahren vorteilhaft anzuwenden, ergibt sich, wenn das Spektrum nicht periodisch, sondern wenigstens strukturiert ist. Durch Auswahl einer Wellenlänge in einem Bereich relativ starker Absorptionsänderung der Meokomponente wird bei Anwesenheit derselben ebenfalls ein Nutzsignal erzeugt. Wird die Wellenlänge so gewählt, daß die Absorption von Störkomponenten in diesem Bereich gering ist oder sich nur geringfügig über die Wellenlänge ändert, kann auf diese Weise die gewünschte Selektivität erzeugt werden. Für die Untersuchung unterschiedlicher Substanzen braucht man lediglich entsprechende Platten unterschiedlicher Dioke zu verwenden.

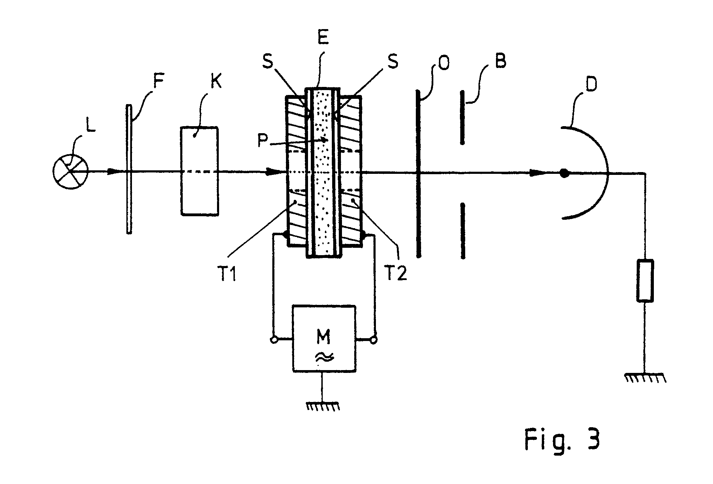

Im folgenden wird anhand von Fig. 3 ein Ausführungsbeispiel der Erfindung näher erläutert. Das von der Strahlungsquelle L kommende breitbandige Licht wird von einem optischen Filter F zunächst auf den interessierenden Teil begrenzt. Im Strahlengang folgt anschließend eine Küvette K mit der zu untersuchenden Substanz sowie eine thermooptisch abstimmbare Platte P, die an beiden Stirnflächen die teildurchlässigen Spiegel S aufweist. Als Material für die Platte kommen besonders solche Stoffe in Betracht, die einen großen thermooptischen Koeffizienten, d.h. eine große temperaturabhängige Änderung des Produkts aus Brechungsindex und Dicke, aufweisen. Beispiele hierfür sind Silicium oder Zinkselenid. Auf den Stirnflächen befinden sich zur Temperaturmodulation die Peltierelemente T1 und T2, die von einer Elektronik M angesteuert werden. Hinter der elektrothermischen Platte ist ein Objektiv O angeordnet. Durch eine Blende B kann der interferometrische Auswertebereich auf einen mittleren Bereich in der Nähe der optischen Achse beschränkt werden. Die durch die Blende hindurchgehende Strahlung wird vom Detektor D erfaßt und in ein elektrisches Signal umgesetzt.

**Ansprüche**

1. Interferometrische Einrichtung zum Nachweis einer Substanz mit strukturiertem, insbesondere periodischem oder quasiperiodischem Absorptionsspektrum, mit einer Strahlungsquelle, in deren Strahlengang
- die zu untersuchende Substanz,
- ein Interferenzfilter, dessen Dicke den Abstand der Interferenzlinien bestimmt und
- ein Detektor angeordnet sind,
dadurch gekennzeichnet, daß
- das Interferenzfilter ein thermooptisch abstimmbares Filter (E) ist, welches aus einer Platte (P) aus thermooptisch aktivem Material besteht, deren Stirnseiten teildurchlässig verspiegelt (S) sein können,
- daß eine Verschiebung der Durchlaßcharakteristik des Filters (E) mit Hilfe einer Temperaturänderung des Filters erzeugt wird, wobei die Temperaturdifferenz ein Maß für die Verschiebung ist
- und daß die Dicke der Platte so gewählt ist,
a) daß der Abstand der erzeugten Interferenzlinien dem Abstand der Absorptionslinien der zu bestimmenden Substanz entspricht oder
b) daß eine Linie der Strahlung ausgeblendet wird, deren Bandbreite gering ist gegen den Abstand zweier Linien der zu untersuchenden Substanz oder
c) daß eine Linie der Strahlung so ausgeblendet wird, daß sie die Flanke einer Absorptionsbande der zu untersuchenden Substanz überlappt.

2. Interferometrische Einrichtung nach Anspruch 1, dadurch gekennzeichnet, daß das thermooptisch aktive Material Silicium ist.

3. Interferometrische Einrichtung nach Anspruch 1, oder 2, dadurch gekennzeichnet, daß zum Nachweis mehrerer Komponenten eines Substanzgemisches mehrere thermooptisch abstimmbare Filter hintereinander in den Strahlengang eingeschaltet sind.

Substanz

Absorption

Wellenlänge

Fig. 1a

Filter E

Transmission

Meßphase

Fig. 1b

Filter E

Transmission

Referenzphase

Fig. 2

4

Fig. 3